# FASCICULE DE BREVET EUROPEEN

(11) **EP 4 329 926 B1**
(45) Date de publication et mention de la délivrance du brevet: **14.01.2026**
(21) Numéro de dépôt: 22726782.0
(22) Date de dépôt: 28.04.2022
(51) Int. Cl.: B01D 65/08, B01D 61/04, B01D 61/12

(54) **PROCÉDÉ ET SYSTÈME DE CONTRÔLE PRÉVENTIF D'UNE UNITÉ DE SÉPARATION MEMBRANAIRE APTE A EMPÊCHER LE COLMATAGE**
VERFAHREN UND SYSTEM ZUR PRÄVENTIVEN STEUERUNG ZUR VERHINDERUNG DER VERSCHMUTZUNG EINER MEMBRANTRENNEINHEIT
PREVENTIVE CONTROL METHOD AND SYSTEM FOR PREVENTING THE FOULING OF A MEMBRANE SEPARATION UNIT

(30) Priorité: 29.04.2021 FR 2104506; 16.02.2022 FR 2201344
(43) Date de publication de la demande: 06.03.2024
(73) Titulaire: SUEZ International, 92800 Puteaux (FR)
(72) Inventeur: FILLOUX, Emmanuelle, 92110 Clichy (FR); BREHANT, Anne, 92000 Nanterre (FR); LEVECQ, Céline, 78400 CHATOU (FR); BONNELYE, Véronique, 78700 Conflans Sainte Honorine (FR); DU BESSET, Raphaëlle, 75019 PARIS (FR)
(74) Mandataire: Lavoix
(86) Numéro de dépôt international: PCT/FR2022/050808
(87) Numéro de publication internationale: WO 2022/229561

(56) Documents cités:
- EP-A1- 3 685 908
- EP-B1- 1 888 209
- WO-A1-2010/109265
- US-A1- 2013 075 331
- US-A1- 2014 332 450
- US-A1- 2017 203 979
- US-A1- 2020 353 421
- US-B2- 10 472 254

## Description

### Domaine de l'invention

L'invention concerne un procédé et un système de contrôle d'une unité de séparation membranaire, notamment par osmose inverse ou nanofiltration, d'une installation de traitement de l'eau. En particulier, l'invention concerne un procédé et système permettant de faire fonctionner une unité de séparation membranaire sans risque de colmatage et à moindre coût.

### Etat de la technique

L'osmose inverse est une méthode de séparation membranaire qui a suscité un grand intérêt dans le traitement de l'eau au cours de ces dernières années, par exemple pour le dessalement de l'eau de mer, la purification de l'eau saumâtre et l'obtention d'eau potable, ainsi que pour la purification des eaux usées industrielles ou la préparation d'eau pure et ultra-pure pour diverses applications industrielles.

Dans un système d'osmose inverse, les substances dissoutes sont éliminées d'un milieu habituellement aqueux, comme une solution aqueuse comprenant un ou plusieurs composés dissous dans celle-ci sous forme d'ions, et sont séparées du solvant en pressant ladite solution sous haute pression à travers une membrane semiperméable qui permet de façon très sélective aux molécules de solvant de passer à travers la membrane formant ce que l'on appelle le perméat, sensiblement exempt de toute impureté comme les ions dissous initialement présents dans la solution d'alimentation. Les impuretés sont retenues dans un concentré, appelé rétentat (ou concentrât) qui est par conséquent plus riche en matières dissoutes que la solution d'alimentation.

Un problème récurrent associé à un fonctionnement continu à long terme des systèmes d'osmose inverse est le contrôle, ou plutôt la prévention, des dépôts dans le système, en particulier des dépôts se formant sur la surface de la membrane qui fait face au rétentat. Outre ce qu'on appelle l'« encrassement » ou « colmatage » (« fouling » en anglais), c'est-à-dire le dépôt de matières organiques en suspension, de colloïdes et de micro-organismes sur la membrane, l'« entartrage » (« scaling » en anglais), c'est-à-dire la formation de précipités inorganiques, est une cause majeure de la formation de tels dépôts. Ces deux phénomènes, l'encrassement et l'entartrage, ont tendance à bloquer la membrane pour les molécules de solvant. Il en résulte une diminution du débit de perméat du système, une réduction de la sélectivité du système, une augmentation des coûts énergétiques, une réduction des cycles de purification de la membrane et une réduction de sa durée de vie.

Le terme « entartrage » se réfère à la formation de dépôts inorganiques par précipitation se produisant lorsque la concentration dans le rétentat de certains sels plus ou moins solubles dans l'eau, comme par exemple le CaCO₃, le Ca₂(PO₄)₃, les sulfates de métaux alcalino-terreux, en particulier le CaSO₄, le BaSO₄ et le SrSO₄, et/ou certains silicates et similaires, dépasse la limite de solubilité de ces sels. La concentration de particules ioniques retenues dans le rétentat est particulièrement élevée dans l'eau située à proximité immédiate de la surface de la membrane, où elle peut être jusqu'à 20 % plus élevée que dans le rétentat.

Généralement, afin d'éviter la précipitation et le colmatage du système membranaire, des composés chimiques inhibiteurs de précipitation (souvent appelés « anti-scaling agent » en anglais) sont ajoutés à l'eau à traiter et le pH est ajusté, le plus souvent par ajout d'acide. En outre, le taux de récupération de perméat est ajusté afin que les concentrations maximales de sels susceptibles de précipiter restent sous la limite de solubilité dans le rétentat.

Les inhibiteurs de précipitation sont des composés qui interfèrent avec, ou perturbent, la croissance cristalline de composés susceptibles de précipiter. Ces composés agissent soit en formant des complexes relativement solubles avec les ions susceptibles de précipiter, soit en dispersant les composés de la précipitation.

Le dosage appliqué des inhibiteurs de précipitation et/ou d'acide est généralement calculé sur la base d'une analyse chimique de la composition moyenne du milieu aqueux d'alimentation. Les méthodes de calcul couramment utilisées ne tiennent compte que de certains paramètres modèles pour la formation de tartre, par exemple l'indice de saturation (IS) des composés susceptibles de précipiter présents dans le milieu d'alimentation et son pH, mais ignorent d'autres paramètres souvent trop complexes pour être accessibles. Le dosage conventionnel des inhibiteurs de précipitation est donc plutôt imprécis, et une trop grande quantité d'inhibiteurs de précipitation et/ou d'acide est généralement utilisée afin d'éviter un entartrage du système membranaire. Ces surdosages, s'ils permettent un mode de fonctionnement sûr des systèmes de séparation membranaire, ont un impact important sur les coûts de fonctionnement de ces systèmes de séparation ainsi que sur les coûts de post-traitement du perméat (par reminéralisation).

Le document EP 1 888 209 décrit un procédé de traitement d'un milieu aqueux utilisant l'osmose inverse dans lequel on suit en continu la présence dans le rétentat de particules de composés susceptibles de précipiter par mesure de la turbidité ou par comptage du nombre de particules ayant une taille spécifique, on compare les données relatives à ces particules avec des données déterminées expérimentalement préalablement pour un milieux aqueux similaire dans des conditions de fonctionnement similaires et on ajoute un inhibiteur de précipitation lorsque les données provenant du suivi en continu diffèrent des données expérimentales. Ce procédé présente l'inconvénient de détecter des particules de composés susceptibles de précipiter. La présence de ces particules signifie cependant que la précipitation a débuté : le procédé décrit ne permet donc pas de prévenir une précipitation mais de la limiter, ce qui peut s'avérer insuffisant. En outre, les données de comparaison sont basées sur des données expérimentales obtenues à partir d'un même milieu aqueux à traiter, dans des conditions de fonctionnement identiques : ces données expérimentales risquent de ne pas limiter la précipitation lors d'une variation dans la composition du milieu aqueux à traiter, dans la mesure où celle-ci n'est pas suivie.

Les problèmes de colmatage et entartrage sont observés à la fois pour les systèmes de séparation membranaire à osmose inverse et nanofiltration.

Il existe donc encore un besoin pour un procédé permettant d'injecter des quantités d'inhibiteurs de précipitation et/ou d'acide minimales pour empêcher de manière fiable une précipitation des espèces susceptibles de précipiter. Il existe également un besoin pour optimiser les coûts de fonctionnement, de préférence en prenant en considération les coûts de post traitement.

### Résumé de l'invention

L'invention concerne un procédé et un système de contrôle d'une unité de séparation membranaire d'une installation de traitement d'un effluent liquide aqueux. Une unité de séparation membranaire reçoit l'effluent à traiter et produit un rétentat et un perméat. Le procédé et le système de contrôle de l'invention, destinés à contrôler une unité de séparation membranaire comprenant un système d'injection d'au moins un composé chimique dans l'effluent à traiter, permettent de réguler au moins un paramètre choisi parmi une quantité de composé(s) chimique(s) à ajouter et un taux de conversion afin d'éviter le colmatage et/ou la précipitation d'espèces ioniques dans le rétentat. Cette régulation utilise des valeurs de consignes optimales déterminées en fonction d'un ou plusieurs paramètres caractéristiques du rétentat.

En déterminant une valeur de consigne en fonction d'un paramètre caractéristique du rétentat et non de l'eau à traiter, le procédé et le système de contrôle selon l'invention permettent de réaliser une régulation précise de la quantité de composé(s) chimique(s) à ajouter et/ou du taux de conversion de l'unité de séparation membranaire, à une valeur optimale permettant à la fois d'éviter le colmatage et/ou la précipitation des espèces susceptibles de précipiter et de minimiser les coûts de fonctionnement. Ainsi, le procédé et le système de contrôle selon l'invention permettent d'ajuster les paramètres de fonctionnement de l'unité de séparation membranaire avant l'apparition des phénomènes de colmatage et/ou précipitation, notamment avant la formation de particules de composés susceptibles de précipiter, assurant ainsi un fonctionnement fiable dans la durée de l'unité de séparation membranaire et l'augmentation de sa durée de vie, tout en limitant les coûts d'exploitation.

En particulier, en choisissant comme paramètre caractéristique du rétentat, le pH, un paramètre chimique de mesure de la concentration de l'ion oxonium H₃O⁺ dans une solution aqueuse, l'invention permet de réaliser une régulation avant la formation (et donc la détection éventuelle) de particules de composés susceptibles de précipiter, avec les avantages susmentionnés.

### Définitions

Le taux de conversion est défini de manière usuelle comme étant le rapport du débit de perméat au débit total d'alimentation de l'unité de séparation membranaire. Le taux de conversion permet de caractériser le fonctionnement hydraulique de l'installation.

Par « valeur en cours » d'un paramètre, on entend la dernière valeur déterminée de ce paramètre.

L'unité de séparation membranaire mentionnée dans la présente invention peut comprendre un, deux ou plusieurs étages de filtration, notamment trois étages, typiquement agencés en série. Chaque étage de filtration produit un rétentat et un perméat, le rétentat d'un étage amont formant l'effluent à traiter de l'étage aval. Chaque étage de filtration est composé d'un ou plusieurs modules membranaires, typiquement connectés en série et/ou parallèle. On pourra par exemple utiliser des modules membranaires et des modules de filtration FILMTEC^{®}.

Par « effluent à traiter », on entend un effluent liquide aqueux à traiter tel qu'une eau brute (eaux de surface ou souterraines), l'eau de mer, les eaux saumâtres, les effluents urbains, les effluents industriels, le rétentat d'un ou plusieurs des étages de filtration d'une unité de séparation membranaire à plusieurs étages, seuls ou en mélanges.

Notamment, le rétentat sortant de l'unité de séparation membranaire (à un ou plusieurs étages) peut être recyclé à l'entrée de celle-ci.

### Description détaillée de l'invention

Un premier objet de l'invention concerne un procédé de contrôle d'une unité de séparation membranaire d'une installation de traitement d'un effluent liquide aqueux, l'unité de séparation membranaire recevant l'effluent à traiter, produisant un rétentat et un perméat et comprenant un système d'injection d'au moins un composé chimique dans l'effluent à traiter. Optionnellement, l'au moins un composé chimique peut être choisi parmi un composé chimique permettant d'ajuster le pH, en particulier un acide, et un inhibiteur de précipitation.

Dans le procédé de contrôle selon l'invention :
(a) on mesure (directement ou indirectement) une valeur du pH du rétentat,
(b) on détermine à partir de la valeur mesurée du pH du rétentat, au moins une valeur de consigne optimale pour éviter le colmatage de l'unité de séparation membranaire et/ou la précipitation dans le rétentat d'espèces ioniques initialement présentes dans l'effluent à traiter, choisie parmi :
   (i) une première valeur de consigne correspondant à une quantité minimale de l'au moins un composé chimique à ajouter à l'effluent à traiter pour un taux de conversion en cours de l'unité de séparation membranaire,
   (ii) une deuxième valeur de consigne correspondant à un taux de conversion maximal en absence d'ajout de composé chimique,
   (iii) un couple d'une troisième et quatrième valeur de consigne correspondant à une quantité minimale de l'au moins un composé chimique à ajouter à l'effluent à traiter combiné à un taux de conversion maximal,
(c) on applique ladite au moins une valeur de consigne optimale au paramètre correspondant de l'unité de séparation membranaire.

Le procédé selon l'invention permet de réguler à une valeur optimale au moins un des paramètres précités, à savoir la quantité de composé chimique à ajouter et/ou le taux de conversion, à une valeur de consigne spécifique à partir de la valeur mesurée du pH du rétentat et optionnellement d'autres paramètres du rétentat ou de l'effluent à traiter décrits plus bas. Dit autrement, l'invention permet de réguler la quantité de composé chimique à ajouter et/ou le taux de conversion en utilisant uniquement la valeur mesurée du pH du rétentat, et optionnellement d'au moins un autre paramètre choisi, notamment uniquement, parmi la conductivité du rétentat, une concentration du rétentat en au moins une espèce ionique susceptible de précipiter, la température du rétentat et la température de l'effluent à traiter. D'autres paramètres permettant de détecter la présence de particules dans le rétentat, tels que la turbidité, ou de compter le nombre de particules ne sont pas utilisés dans la présente invention car la détection/comptage de particules signifie que la précipitation a déjà débuté.

Lorsque l'unité de séparation membranaire comprend deux ou plusieurs étages, le rétentat dont on mesure une valeur du pH à l'étape (a) du procédé selon l'invention est le rétentat issu du dernier étage de l'unité de séparation membranaire. L'effluent à traiter peut avantageusement être l'effluent entrant dans l'unité de séparation membranaire et/ou le rétentat issu d'un ou plusieurs des étages situés en amont du dernier étage de l'unité de séparation membranaire.

L'unité de séparation membranaire peut en outre comprendre une boucle de recirculation du rétentat, notamment du rétentat issu du dernier étage membranaire lorsque l'unité est à plusieurs étages, à l'entrée de l'unité de séparation membranaire. Cette recirculation permet d'optimiser la reminéralisation du perméat mais augmente le risque de colmatage de l'unité de séparation membranaire, ce dernier pouvant être maitrisé par la mise en œuvre du procédé et système de contrôle selon l'invention. Notamment, la recirculation peut être pilotée sur la base de la conductivité ou d'un autre paramètre de qualité du perméat sortant de l'unité de séparation membranaire.

Une première valeur de consigne correspond à une quantité minimale de composé chimique à ajouter à l'effluent à traiter pour éviter le colmatage de l'unité de séparation membranaire et/ou la précipitation dans le rétentat d'espèces ioniques présentes initialement dans l'effluent pour les paramètres de fonctionnement en cours, en particulier pour le taux de conversion en cours. Autrement dit, il s'agit d'ajouter une quantité de composé chimique juste suffisante pour empêcher le colmatage et/ou la précipitation, sans excès, dans des conditions de fonctionnement définies par le taux de conversion en cours de l'unité de séparation membranaire.

De manière générale, un ou plusieurs composés chimiques peuvent être ajoutés à l'effluent à traiter à cet effet. Une ou plusieurs premières valeurs de consigne peuvent ainsi être déterminées. Le composé chimique peut être choisi indifféremment parmi un composé chimique permettant d'ajuster le pH et un inhibiteur de précipitation.

Toutefois, avantageusement, lorsque la valeur de consigne déterminée est une quantité de composé chimique à ajouter à l'effluent, on pourra choisir en priorité une valeur de consigne pour au moins un composé chimique permettant d'ajuster le pH, et optionnellement une valeur de consigne pour au moins un inhibiteur de précipitation.

Le pH peut être ajusté par l'ajout d'une base ou d'un acide. Notamment, un pH acide favorise la solubilité des sels de type carbonates de calcium, souvent présents dans les effluents aqueux à traiter. Le plus souvent, le composé chimique permettant d'ajuster le pH sera ainsi un composé permettant d'ajuster le pH à un pH acide (pH inférieur à 7), tel qu'un acide ou du CO₂. Les acides inorganiques (par exemple, l'acide chlorhydrique (HCl), l'acide nitrique (HNO₃), l'acide sulfurique (H₂SO₄), l'acide phosphorique (H₃PO₄), et les acides organiques tels que l'acide formique (CH₂O₂), l'acide acétique (CH₃COOH), l'acide sulfamique (H₃NSO₃) sont des exemples d'acides susceptibles de modifier le pH.

Un inhibiteur de précipitation est un composé chimique permettant d'inhiber la précipitation d'au moins une espèce chimique telle que le carbonate de calcium, le sulfate de calcium, les sulfates des autres métaux alcalino-terreux, le phosphate de calcium, le fluorure de calcium, la silice.

Des inhibiteurs de précipitation utilisables comprennent notamment des inhibiteurs dits de seuil, c'est-à-dire des composés chimiques qui retardent ou perturbent la phase de croissance de la cristallisation et inhibent ainsi la formation de cristaux, soit en empêchant la formation de cristaux d'ensemencement suffisamment grands pour précipiter de la solution, soit en provoquant une distorsion des cristaux, laissant ainsi des cristallites amorphes duveteux qui restent en suspension et/ou sont facilement mis en solution de sorte qu'ils peuvent être facilement éliminés.

Certains inhibiteurs de précipitation comprennent en outre des agents dispersants qui créent une charge à la surface des cristallites et maintiennent ainsi les particules en suspension.

L'homme du métier sera à même de déterminer les inhibiteurs de précipitation à utiliser en fonction de la nature des espèces ioniques susceptibles de précipiter présentes dans le rétentat et provenant de l'effluent à traiter.

Des exemples de composés utiles comme inhibiteurs de précipitation comprennent les polyphosphates, comme l'hexamétaphosphate de sodium, les polyphosphonates, comme l'acide nitrilotrimethylenetriphosphonique (N°CAS 6419-19-8), l'acide diéthylènetriamine-pentaméthylènephosphonique, (DTPMP, N°CAS 15827-60-8), l'acide 2-phosphonobutane- 1, 2, 4-tricarboxylique (PBTC, N° CAS 37971-36-1) et l'acide 1-hydroxyéthane- 1, 1-diphosphonique) (HEDP, N° CAS 2809-21-4). D'autres exemples d'inhibiteurs de précipitation sont à base de polymères d'acide polyacrylique (PAA), d'acide polyméthacrylique (PMAA) et/ou d'acide polymaléique (PMA). Les acides polyacryliques d'une masse molaire de 1000 à 3000 g/mol sont utiles en raison de leur effet de seuil ; d'une masse molaire de 5000 à 10000 g/mol en raison de leur capacité à provoquer un effet de distorsion ; et d'une masse molaire de 20000 g/mol et plus, par exemple 20000 à 40000 g/mol comme agents dispersants. De nombreux composés utiles comme inhibiteurs de précipitation tels que ceux précédemment mentionnés sont commercialisés, par exemple par la société ROPUR AG.

Une deuxième valeur de consigne correspond à un taux de conversion maximal de l'unité de séparation membranaire prévenant (empêchant) le colmatage de l'unité de séparation membranaire et/ou la précipitation dans le rétentat d'espèces ioniques initialement présentes dans l'effluent à traiter, en l'absence d'ajout de composé chimique. Autrement dit, il s'agit du taux de conversion le plus élevé pour lequel on n'observe pas de colmatage/précipitation.

Ainsi, dans certains cas, le seul contrôle du taux de conversion peut en effet permettre de maintenir la concentration dans le rétentat de la ou des espèces susceptibles de précipiter à un niveau inférieur au seuil de précipitation, à savoir inférieur à la limite de solubilité. Ceci dépendra généralement de la nature des espèces chimiques susceptibles de précipiter présentes dans l'effluent à traiter et de leurs concentrations.

Un couple d'une troisième et d'une quatrième valeur de consigne peut enfin être déterminé. Ces valeurs de consigne correspondent à une quantité minimale de l'au moins un composé chimique à ajouter à l'effluent à traiter en combinaison avec un taux de conversion maximal, cette combinaison permettant d'éviter le colmatage de l'unité de séparation membranaire et/ou la précipitation dans le rétentat d'espèces ioniques. Autrement dit, il s'agit de déterminer une quantité de l'au moins un composé chimique juste suffisante pour éviter le colmatage pour un taux de conversion le plus élevé possible. Ceci permet d'optimiser à la fois la quantité de composé(s) chimique(s) ajoutée et le taux de conversion.

Le couple des troisième et quatrième valeurs de consigne peut par exemple être choisi en fonction d'un ou plusieurs des éléments suivants : débit de perméat souhaité, quantité d'effluent à traiter (par exemple quantité nécessaire pour obtenir un rendement particulier de l'unité de séparation), débit de rejet maximal autorisé, concentration maximale autorisée dans l'effluent en un composé, réglementation, teneur d'un composé/élément que les inhibiteurs de précipitation ne savent pas bien contrôler (silice, Al, Fe), coûts de fonctionnement, notamment coûts de prétraitement (coût de l'effluent à traiter) et/ou consommation électrique et/ou coût des composés chimiques ajoutés et/ou coûts ultérieurs de post-traitement.

En particulier, on pourra déterminer la deuxième valeur de consigne ou le couple des troisième et quatrième valeurs de consigne à partir d'au moins une valeur de consigne d'un coût de fonctionnement, notamment d'un coût post-traitement d'au moins un flux choisi parmi le rétentat et le perméat, tout en recherchant de préférence le meilleur compromis en terme de coût(s) de fonctionnement /rendement de l'unité de séparation, et en particulier en terme de coût des composés chimiques ajoutés/rendement de l'unité de séparation. En effet, en fonction de la nature et de la quantité de composé(s) chimique(s) ajouté(s), il peut s'avérer nécessaire de traiter le rétentat et/ou le perméat sortant de l'unité de séparation membranaire, ce qui peut augmenter de manière conséquente le coût global de traitement de l'effluent. Typiquement, le post-traitement du rétentat peut être une dilution ou une concentration avec éventuellement une récupération des minéraux. Le post-traitement du perméat a généralement pour objectif de le rendre non corrosif ou de le reminéraliser ou de le désinfecter. Ainsi, lorsque l'on détermine la deuxième valeur de consigne ou le couple des troisième et quatrième valeurs de consigne à partir d'au moins une valeur de consigne d'un coût de fonctionnement, on peut déterminer la deuxième valeur de consigne ou le couple des troisième et quatrième valeurs de consigne pour lequel une valeur de consigne d'un coût de fonctionnement est respectée. Cette valeur de consigne d'un coût de fonctionnement peut correspondre :
- pour la deuxième valeur de consigne, à un taux de conversion maximal de l'unité de séparation membranaire en l'absence d'ajout d'un composé chimique, pour lequel un post-traitement du perméat et/ou du rétentat produits est le moins coûteux en termes de consommation de produits chimiques et/ou de consommation énergétique,
- pour le couple des troisième et quatrième valeurs de consigne, à une quantité minimale de l'au moins un composé chimique à ajouter à l'effluent à traiter combiné à un taux de conversion maximal pour lesquels un post-traitement du perméat et/ou du rétentat produits est le moins coûteux en termes de consommation de produits chimiques et/ou de consommation énergétique.

Le choix entre les valeurs de consigne optimales telles que définies aux points (i), (ii) et (iii) du procédé selon l'invention pourra dépendre d'exigences réglementaires ou contractuelles et d'éventuelles d'exigences en terme de coûts, en fonction notamment de la composition ionique de l'effluent et de la température. La réalisation de tests permettra à l'homme du métier de choisir la valeur de consigne optimale ou le couple de valeurs de consigne optimales le plus approprié.

Une fois la ou les valeurs de consigne optimales précédemment décrites déterminées au cours de l'étape (b), on peut alors appliquer cette valeur (ou ces valeurs) au paramètre correspondant de l'unité de séparation membranaire au cours de l'étape (c). Une boucle de régulation formée par réitération des étapes du procédé de contrôle lors du fonctionnement de l'unité de séparation membranaire peut être prévue afin d'éviter tout risque de colmatage et/ou précipitation de l'unité dans la durée.

Dans un mode de réalisation, les étapes (b) et (c) peuvent être mises en œuvre à chaque mesure de la valeur du pH du rétentat. On peut alors procéder à une itération des étapes (a) à (c).

Dans un autre mode de réalisation, les étapes (b) et (c) peuvent être mises en œuvre uniquement lorsque la valeur du pH du rétentat mesurée à l'étape (a) varie. Ceci permet notamment de simplifier la régulation et de la rendre plus rapide. On peut alors procéder à une itération de l'étape (a) puis vérifier à chaque itération au cours d'une étape (a') si la valeur du pH du rétentat mesurée à l'étape (a) atteint au moins une valeur seuil prédéterminée ou varie d'au moins une quantité prédéterminée, puis mettre en œuvre les étapes (b) et (c) lorsque ladite au moins une valeur seuil prédéterminée ou quantité prédéterminée est atteinte. On pourra notamment prévoir une ou plusieurs valeurs seuils prédéterminées ou une ou plusieurs quantités prédéterminées, par exemple pour détecter des variations plus ou moins importantes et/ou rapides du pH du rétentat. Ceci peut permettre de déterminer des valeurs de consignes différentes en fonction de l'urgence de la situation, une variation très importante et/ou rapide du pH reflétant une modification brutale/rapide de l'effluent nécessitant une action rapide. Ainsi, ces valeurs seuils ou quantités prédéterminées pourront être déterminées en fonction de la fréquence d'itération de l'étape (a), notamment en fonction d'une fréquence de mesure du pH. Cette fréquence pourra être choisie afin de permettre un ajustement de la ou des valeurs de consigne déterminées à l'étape (b) permettant de prendre en compte d'éventuelles variations dans le temps de la qualité de l'effluent à traiter.

De manière générale, lorsqu'il y a itération de l'étape (a) ou des étapes (a) à (c), la valeur mesurée d'un paramètre pris en compte pour l'étape (b) est la valeur en cours de ce paramètre.

De manière générale, la détermination de la variation d'un paramètre peut être réalisée de manière classique par comparaison de la valeur en cours du paramètre avec la valeur du même paramètre mesurée lors de l'itération précédente de l'étape (a) ou des étapes (a) à (c). Ainsi, une variation du pH du rétentat pourra typiquement être observée à partir de la deuxième itération de l'étape (a) ou des étapes (a) à (c).

Avantageusement, au cours de l'étape (a), on pourra mesurer (directement ou indirectement) la valeur d'au moins un autre paramètre du rétentat choisi, notamment uniquement, parmi la conductivité et une concentration en au moins une espèce ionique susceptible de précipiter. Dès lors, au cours de l'étape (b), on détermine l'au moins une valeur de consigne à partir de la valeur mesurée du pH du rétentat et de la valeur mesurée de l'au moins un autre paramètre du rétentat.

Afin de simplifier la régulation, on pourra ne prendre en compte cet autre paramètre que lorsqu'une variation de ce paramètre est déterminée, par exemple au cours de l'étape (a'). Alors, avantageusement, au cours de l'étape (b), on pourra déterminer l'au moins une valeur de consigne à partir de la valeur mesurée du pH du rétentat et de la valeur mesurée de l'au moins un autre paramètre du rétentat pour lequel une variation est déterminée.

Ceci permet d'améliorer la précision du contrôle de l'unité de séparation membranaire en ne modifiant la ou les valeurs de consigne que lorsqu'une variation de la conductivité ou de la concentration en espèce(s) ionique(s) susceptible(s) de précipiter est détectée, autrement dit lors d'une variation de la composition de l'effluent à traiter et par conséquent du rétentat.

On peut par exemple considérer qu'une variation du paramètre est déterminée lorsque ce paramètre varie d'une quantité prédéterminée ou lorsqu'il atteint une valeur seuil prédéterminée.

En particulier, lorsqu'une variation est déterminée à la fois pour la valeur de la conductivité et pour une concentration en au moins une espèce ionique susceptible de précipiter, on pourra déterminer ladite au moins une valeur de consigne à partir de la valeur mesurée du pH du rétentat et de la valeur mesurée de ladite au moins une concentration pour laquelle une variation a été déterminée. Autrement dit, on priorise la détermination de la ou des valeurs de consigne à partir de la valeur du pH et de la concentration, ce qui permet une meilleure précision dans la détermination de la valeur de consigne.

Typiquement, les espèces ioniques susceptibles de précipiter comprennent l'ion calcium, l'ion carbonate (HCO₃⁻), l'ion magnésium, l'ion sulfate (SO₄²⁻), l'ion silicium, l'ion baryum, l'ion strontium, l'ion manganèse, l'ion fer II, l'ion fer III, l'ion aluminium et l'ion fluorure. Aussi, avantageusement, on pourra déterminer au cours de l'étape (a) une concentration du rétentat en au moins de ces espèces ioniques.

Avantageusement, au cours de l'étape (a), on pourra mesurer au moins une température choisie parmi la température de l'effluent à traiter et la température du rétentat, et au cours de l'étape (b), on pourra déterminer ladite au moins une valeur de consigne à partir de la valeur mesurée du pH, de la valeur mesurée de l'au moins une température déterminée, et optionnellement de la valeur mesurée de l'au moins un autre paramètre de rétentat choisi, notamment uniquement, parmi la conductivité et une concentration en une au moins espèce ionique susceptible de précipiter.

On pourra notamment avantageusement déterminer ladite au moins une valeur de consigne lorsqu'une variation de l'un au moins de ces paramètres est détectée.

Ainsi, au cours de l'étape (b), la valeur de consigne optimale de la quantité de composé(s) chimique(s) à ajouter et/ou du taux de conversion peut être déterminée :
Cas 1 : soit uniquement à partir de la valeur mesurée du pH du rétentat,
Cas 2 : soit à partir :
   ∘ de la valeur mesurée du pH du rétentat, et
   ∘ de la valeur mesurée d'au moins un autre paramètre du rétentat (conductivité, concentration en une espèce ionique susceptible de précipiter),
Cas 3 : soit à partir :
   ∘ de la valeur mesurée du pH du rétentat, et
   ∘ de la valeur mesurée d'au moins une température choisie parmi la température du rétentat et la température de l'effluent à traiter,
Cas 4 : soit à partir :
   ∘ de la valeur mesurée du pH du rétentat, et
   ∘ de la valeur mesurée d'au moins une température choisie parmi la température du rétentat et la température de l'effluent à traiter, et
   ∘ de la valeur mesurée d'au moins un autre paramètre du rétentat (conductivité, concentration en une espèce ionique susceptible de précipiter).

Chacun des cas pourra être choisi en fonction des spécificités de l'installation de traitement, notamment de la qualité de l'effluent à traiter et des variations de cet effluent. Typiquement, le cas 1 est adapté au traitement de n'importe quel type d'effluent et à tout type d'installation. Le cas 2 peut être plus particulièrement adapté au traitement des eaux souterraines. Le cas 3 peut être plus particulièrement adapté au traitement des eaux de surface ou de « reuse » (réutilisation à des fins industrielles ou de potabilisation des eaux usées une fois traitées). Le cas 4 peut être plus particulièrement adapté à des installations plus complexes, traitant par exemple différents types d'effluents (installations multi-sources). La réalisation de tests permettra à l'homme du métier de choisir l'un des cas précités.

Notamment, dans chacun de ces cas, on pourra déterminer au moins une valeur de consigne à l'étape (b) lorsqu'une variation d'au moins un de ces paramètres est détectée. En particulier, on pourra prioriser la détermination de cette valeur de consigne tel que déjà décrit.

Avantageusement, pour une meilleure prévention du colmatage et/ou de la précipitation, au cours de l'étape (a), on pourra mesurer le pH du rétentat, et optionnellement l'au moins autre paramètre du rétentat et/ou l'au moins une température, par des mesures en ligne, autrement dit en temps réel. De préférence, au moins une mesure choisie parmi une mesure de pH, une mesure de conductivité et une mesure de température, est une mesure en ligne réalisée au moyen d'un capteur.

De manière générale, l'étape (a) de détermination pourra être une étape de mesure en ligne, en particulier pour la détermination d'un ou plusieurs des paramètres suivants : pH du rétentat, température du rétentat, conductivité du rétentat, température de l'effluent à traiter, concentration du rétentat en une ou plusieurs espèces ioniques.

De manière générale, la ou les valeurs de consigne déterminées au cours de l'étape (b) peuvent être extraites d'une base de données construite lors d'une étape préalable de construction d'une base de données des valeurs de consigne optimales. Cette base de données associe une ou plusieurs valeurs de consigne à des ensembles de valeurs de paramètres, ces paramètres comprenant le pH du rétentat, au moins un paramètre de fonctionnement de la même unité de séparation membranaire, et optionnellement au moins un autre paramètre choisi, notamment uniquement, parmi la température du rétentat, la température de l'effluent à traiter, la conductivité du rétentat et une concentration du rétentat en au moins une espèce susceptible de précipiter. Le paramètre de fonctionnement de la même unité de séparation membranaire est typiquement le taux de conversion de cette unité.

Cette base de données peut être construite en prenant en compte une partie ou la totalité des coûts de fonctionnement de l'installation (coûts de prétraitement, coûts électriques, coûts post-traitement).

Cette étape préalable peut être une étape de détermination expérimentale, empirique ou associer les deux.

En particulier, cette étape préalable peut comprendre la construction d'une matrice, laquelle :
- comprend une pluralité de classes de rétentats, chaque classe de rétentat étant définie par une valeur de pH du rétentat et optionnellement par au moins un autre paramètre du rétentat (en particulier choisi, notamment uniquement, parmi conductivité, température, concentration en espèce ionique susceptible de précipiter) ou de l'effluent à traiter (température), notamment pour des paramètres de fonctionnement de l'unité de séparation membranaire autres que ceux de la ou des valeurs de consigne à déterminer,
- associe à chaque classe de rétentat au moins une des valeurs de consigne telles que précédemment décrites.

De manière générale, le procédé de contrôle selon l'invention pourra comprendre une étape de régulation au cours de laquelle on régule au moins le taux de conversion de l'unité de séparation membranaire à une valeur de consigne initiale et optionnellement une quantité d'au moins un composé chimique à ajouter à l'effluent à traiter à une valeur de consigne initiale. Cette étape de régulation est typiquement réalisée avant l'étape (a) du procédé.

Au cours de cette étape, on pourra également prévoir de réguler un ou plusieurs autres paramètres de fonctionnement de l'unité de séparation à une valeur de consigne initiale. Ces autres paramètres de fonctionnement sont typiquement la pression de l'effluent à traiter, le débit de l'effluent à traiter, la pression du rétentat, la température de l'effluent à traiter, le débit de perméat, la pression différentielle. La régulation de ces autres paramètres de fonctionnement peut être effectuée de manière classique au moyen d'une ou plusieurs boucles de régulation recevant des données fournies par des capteurs de ces autres paramètres de fonctionnement prévus en des endroits appropriés de l'unité de séparation membranaire, la ou les boucles de régulation agissant sur des moyens de réglage de ces paramètres. Cette ou ces boucles de régulation peuvent être incorporées au système de contrôle de l'invention.

La ou les valeurs de consigne initiales correspondent généralement à des valeurs fixées lors de la mise en route de l'unité de séparation membranaire. Ces valeurs de consigne initiales peuvent être déterminées de manière usuelle (par calculs et/ou de manière empirique) en fonction de l'effluent à traiter et des autres paramètres habituellement pris en compte par les exploitants, à savoir débit de perméat, débit de rétentat, pression de l'effluent à traiter, perte de charge. En général, la valeur de consigne initiale du taux de conversion et des autres paramètres de fonctionnement n'est donc pas nulle. En revanche, la valeur de consigne initiale de quantité d'au moins un composé chimique à ajouter pourra être nulle.

Le procédé selon l'invention peut être mis en œuvre pour le traitement d'un effluent liquide aqueux contenant notamment une ou plusieurs espèces chimiques susceptibles de précipiter, par exemple celles précédemment listées. Cet effluent liquide aqueux peut être choisi parmi les eaux brutes (eaux de surface ou souterraines), l'eau de mer, les eaux saumâtres, les effluents urbains, les effluents industriels et deux ou plusieurs de ces effluents. Ces effluents contiennent plus de 50vol% d'eau, en général plus de 60vol% d'eau. Dans certains cas, la teneur en eau peut être d'au moins 95 %, voire d'au moins 99 %, par exemple jusqu'à 99,9 %, voire jusqu'à 100 %. La teneur en eau peut se situer dans n'importe quelle fourchette définie par les limites précédemment citées. En général, les pourcentages restants sont des solides, tels que des particules, des matières en suspension, des colloïdes, etc.

L'invention a également pour objet un programme informatique comprenant les instructions pour exécuter les étapes du procédé de contrôle selon l'invention, lorsque lesdites instructions sont exécutées par un ou plusieurs processeurs. Le procédé de contrôle selon l'invention peut en effet être mis en œuvre par des moyens de calcul tels qu'un processeur, par exemple un microprocesseur, un microcontrôleur ou autre.

L'invention a encore pour objet un support lisible par ordinateur sur lequel est stocké le programme informatique de l'invention.

Par "Support lisible par ordinateur" on entend toute mémoire, tout dispositif de stockage, tout mécanisme de stockage et tout autre mécanisme de stockage et de signalisation, y compris les interfaces et les dispositifs tels que les cartes d'interface réseau et les mémoires tampons qui s'y trouvent, ainsi que tout dispositif de communication et tout signal reçu et transmis, et toute autre technologie actuelle et évolutive qu'un système informatisé peut interpréter, recevoir et/ou transmettre. Ce concept comprend non seulement un support lisible par ordinateur tel qu'un disque dur connecté à une unité centrale et avec lequel le programme enregistré est directement exécuté, mais aussi un support lisible par ordinateur tel qu'un CD-ROM qui enregistre un programme à exécuter après l'avoir installé sur un disque dur. Un programme comprend ici non seulement un programme qui peut être exécuté directement, mais aussi un programme au format source, un programme compressé et un programme chiffré.

Le procédé de contrôle selon l'invention peut notamment être mis en œuvre au moyen du système de contrôle de l'invention décrit ci-après.

Un autre objet de l'invention concerne un système de contrôle d'une unité de séparation membranaire d'une installation de traitement d'un effluent liquide aqueux, l'unité de séparation membranaire recevant l'effluent à traiter, produisant un rétentat et un perméat et comprenant un système d'injection d'au moins un composé chimique dans l'effluent à traiter.

Le système de contrôle de l'invention comprend :
- des premiers moyens de réglage du taux de conversion de l'unité de séparation membranaire,
- des deuxièmes moyens de réglage d'une quantité d'au moins un composé chimique à ajouter à l'effluent à traiter,
- un moyen de mesure de pH du rétentat,
- des moyens de calcul et de transmission reliés au moyen de mesure de pH du rétentat.

De manière générale, les moyens de calcul et de transmission sont programmés pour mettre en œuvre les étapes précédemment décrites en référence au procédé selon l'invention.

Selon l'invention, les moyens de calcul et de transmission sont programmés pour :
(a) recevoir du moyen de mesure de pH une valeur mesurée du pH du rétentat,
(b) calculer à partir de la valeur mesurée du pH du rétentat, au moins une valeur de consigne optimale pour éviter le colmatage de l'unité de séparation membranaire et/ou la précipitation dans le rétentat d'espèces ioniques initialement présentes dans l'effluent à traiter,
ladite au moins une valeur de consigne étant choisie parmi :
(i) une première valeur de consigne correspondant à une quantité minimale de l'au moins un composé chimique à ajouter à l'effluent à traiter pour un taux de conversion en cours,
(ii) une deuxième valeur de consigne correspondant à un taux de conversion maximal de l'unité de séparation membranaire en l'absence d'ajout d'un composé chimique,
(iii) un couple d'une troisième et quatrième valeur de consigne correspondant à une quantité minimale de l'au moins un composé chimique à ajouter à l'effluent à traiter combiné à un taux de conversion maximal, (c) transmettre ladite au moins une valeur de consigne calculée aux moyens de réglage correspondants.

Les premiers moyens de réglage du taux de conversion de l'unité de séparation membranaire peuvent comprendre un ou plusieurs des moyens de réglage suivants : un moyen de réglage du débit d'effluent à traiter entrant dans l'unité de séparation membranaire, un moyen de réglage du débit de perméat, un moyen de réglage du débit de rétentat, un moyen de réglage de la pression de l'effluent à traiter. Ces moyens de réglage peuvent être une pompe, un débitmètre, une vanne ou similaire.

Les deuxièmes moyens de réglage peuvent comprendre des moyens de réglage du débit de l'au moins un composé chimique à ajouter, tels qu'une pompe, un débit mètre, une vanne ou une combinaison de ces moyens, notamment reliés à une conduite d'alimentation ou un réservoir contenant le composé chimique.

Le moyen de mesure de pH du rétentat est par exemple un pH mètre.

Les moyens de calcul et de transmission peuvent comprendre un ou plusieurs processeurs, par exemple des microprocesseurs ou microcontrôleurs. Des moyens de communication, optionnellement bidirectionnels, peuvent être prévus entre les moyens de calcul et de transmission et les premiers et deuxièmes moyens de réglage et/ou entre les différents moyens de mesure décrits.

Avantageusement, les moyens de calculs et de transmission du système de contrôle selon l'invention peuvent être programmés pour déterminer la deuxième valeur de consigne ou le couple des troisième et quatrième valeurs de consigne à partir d'au moins d'une valeur de consigne d'un coût de fonctionnement, notamment d'un coût de post-traitement d'au moins un flux choisi parmi le rétentat et le perméat, et de préférence à partir de valeurs de consigne des différents coûts de fonctionnement, tels que décrits en référence au procédé.

Avantageusement, les moyens de calculs et de transmission du système de contrôle selon l'invention peuvent être programmés :
- pour recevoir une pluralité de mesures du pH du rétentat, notamment successives dans le temps,
- pour vérifier à chaque nouvelle mesure reçue si la valeur mesurée du pH du rétentat atteint au moins une valeur seuil prédéterminée ou varie d'au moins une quantité prédéterminée, puis,
- pour calculer ladite au moins une valeur de consigne et la transmettre aux moyens de réglage correspondants lorsque ladite au moins une valeur seuil prédéterminée ou quantité prédéterminée est atteinte.

D'autres paramètres peuvent être pris en compte pour la détermination de la ou des valeurs de consigne. Ainsi, avantageusement, le système de contrôle peut comprendre en outre :
- des deuxièmes moyens de mesure de la valeur d'au moins un autre paramètre du rétentat choisi, notamment uniquement, parmi la conductivité et une concentration en au moins une espèce ionique susceptible de précipiter,
et les moyens de calcul et de transmission peuvent être programmés :
- pour recevoir des deuxièmes moyens de mesure une valeur mesurée d'au moins un autre paramètre du rétentat, optionnellement pour déterminer une variation de la valeur mesurée de l'au moins un autre paramètre du rétentat et
- pour calculer l'au moins une valeur de consigne à partir de la valeur mesurée du pH du rétentat et de la valeur mesurée de l'au moins un autre paramètre du rétentat, optionnellement de la valeur mesurée de l'au moins un autre paramètre pour lequel une variation est déterminée.

On peut dès lors prioriser les paramètres à utiliser pour le calcul de la ou des valeurs de consigne, par exemple en programmant les moyens de calculs et de transmission pour, lorsqu'une variation est déterminée à la fois pour la valeur mesurée de la conductivité et de l'au moins une concentration en au moins une espèce ionique susceptible de précipiter, calculer ladite au moins une valeur de consigne à partir de la valeur mesurée du pH du rétentat et de la valeur mesurée de ladite au moins une concentration pour laquelle une variation a été déterminée.

Les deuxièmes moyens de mesure peuvent comprendre des moyens de mesure (directe ou indirecte) d'une concentration en au moins une espèce ionique choisie parmi un ion calcium, un ion carbonate, un ion magnésium, un ion sulfate, un ion silicium, un ion baryum, un ion strontium, un ion manganèse, un ion fer II, un ion fer III, un ion aluminium, un ion fluorure. Ces deuxièmes moyens de mesure peuvent notamment comprendre des moyens de dosage.

Avantageusement, le système de contrôle selon l'invention peut comprendre des troisièmes moyens de mesure d'au moins une température choisie parmi la température de l'effluent à traiter et la température du rétentat. Les moyens de calcul et de transmission peuvent alors être programmés pour calculer ladite au moins une valeur de consigne à partir de la valeur mesurée du pH du rétentat et de la valeur mesurée de l'au moins une température. Les moyens de calcul et de transmission pourront être programmés pour déterminer une variation de l'un au moins de ces paramètres et pour calculer ladite au moins une valeur de consigne lorsqu'une variation de l'un au moins de ces paramètres est déterminée.

Ce mode de réalisation pourra être combiné au mode de réalisation comprenant des deuxièmes moyens de mesure de la valeur d'au moins un autre paramètre de rétentat choisi, notamment uniquement, parmi la conductivité et une concentration en au moins une espèce ionique susceptible de précipiter, et dans lequel les moyens de calcul et de transmission sont programmés pour calculer l'au moins une valeur de consigne à partir de la valeur mesurée du pH du rétentat et de la valeur mesurée de l'au moins un autre paramètre du rétentat.

Avantageusement, les moyens de calcul et de transmission pourront être programmés pour déterminer une variation de l'un au moins de ces paramètres, à savoir pH du rétentat, température du rétentat, température de l'effluent, et optionnellement conductivité et/ou concentration en au moins une espèce ionique susceptible de précipiter, et pour calculer ladite au moins une valeur de consigne lorsqu'une variation de l'un au moins de ces paramètres est déterminée. Tel que précédemment décrit, lorsqu'une variation est déterminée à la fois pour la conductivité et une concentration en au moins une espèce ionique susceptible de précipiter, la valeur de consigne pourra alors être calculée à partir de la valeur mesurée du pH du rétentat, de la valeur mesurée de l'au moins une température et de la valeur mesurée de la concentration en au moins une espèce ionique susceptible de précipiter pour laquelle une variation a été déterminée.

De manière générale, le moyen de mesure de pH du rétentat et optionnellement au moins un des deuxièmes et troisièmes moyens de mesure cités peuvent être des moyens de mesure en ligne. De préférence, on pourra effectuer une mesure en ligne d'un ou plusieurs des paramètres suivants : pH du rétentat, température du rétentat, conductivité du rétentat, température de l'effluent à traiter et concentration du rétentat en une ou plusieurs espèces ioniques.

Les moyens de calcul et de transmission du système de contrôle selon l'invention peuvent en outre être programmés pour déterminer et transmettre aux premiers moyens de réglage au moins une valeur de consigne initiale du taux de conversion de l'unité de séparation membranaire et optionnellement pour déterminer et transmettre aux deuxièmes moyens de réglage une quantité d'au moins un composé chimique à ajouter à l'effluent à traiter à une valeur de consigne initiale. Ces valeurs de consigne initiales pourront être choisies tel que décrit en référence au procédé selon l'invention. En outre, d'autres paramètres de fonctionnement de l'unité de séparation membranaire que ceux cités peuvent être régulés à des valeurs de consigne initiales. Ces paramètres ont été listés relativement au procédé. Leur régulation pourra être obtenue de manière usuelle par une ou plusieurs boucles de régulation recevant des informations fournies par des capteurs de ces paramètres positionnés en des endroits appropriés de l'unité de séparation membranaire et reliées à des moyens de réglage de ces paramètres, ces boucles pouvant être incorporées au système de contrôle de l'invention.

De manière générale, les moyens de calcul et de transmission du système de contrôle selon l'invention peuvent en outre être programmés pour calculer une valeur de consigne à partir d'une base de données des valeurs de consigne du type de celle décrite en référence au procédé et/ou dans la description des figures et établie pour l'unité de séparation membranaire à contrôler. Cette base de données pourra notamment être enregistrée dans une mémoire des moyens de calcul et de transmission.

Un autre objet de l'invention concerne une installation de traitement d'un effluent liquide aqueux présentant un système de contrôle selon l'invention, cette installation de traitement comportant une unité de séparation membranaire recevant l'effluent à traiter, produisant un rétentat et un perméat et comprenant un système d'injection d'au moins un composé chimique dans l'effluent à traiter. Lorsque l'unité de séparation membranaire comprend deux ou plusieurs étages, notamment trois, le système d'injection peut être configuré pour injecter au moins un composé chimique dans l'effluent à traiter, à savoir l'effluent entrant dans l'unité de séparation membranaire et/ou le rétentat issu d'un étage situé en amont du dernier étage et/ou le rétentat issu de chacun des étages situés en amont du dernier étage.

L'invention concerne enfin l'utilisation d'un procédé de contrôle selon l'invention pour prévenir le colmatage d'une installation de traitement d'un effluent liquide aqueux comportant une unité de séparation membranaire recevant l'effluent à traiter, produisant un rétentat et un perméat et comprenant un système d'injection d'au moins un composé chimique dans l'effluent à traiter.

### Description des figures

L'invention est maintenant décrite en référence au dessin annexé, non limitatif, dans lequel :
[Fig. 1] La figure 1 est une représentation schématique d'une unité de séparation membranaire équipée d'un système de contrôle selon l'invention.
[Fig. 2] La figure 2 est une représentation schématique d'une unité de séparation membranaire à trois étages de filtration équipée d'un système de contrôle selon l'invention.
[Fig. 3] La figure 3 est une représentation schématique d'une unité de séparation membranaire à trois étages de filtration et ajout de composés chimique au niveau de chaque étage, équipée d'un système de contrôle selon l'invention.
[Fig. 4] La figure 4 est une représentation schématique d'une unité de séparation membranaire à trois étages de filtration et boucle de recirculation du rétentat équipée d'un système de contrôle selon l'invention.

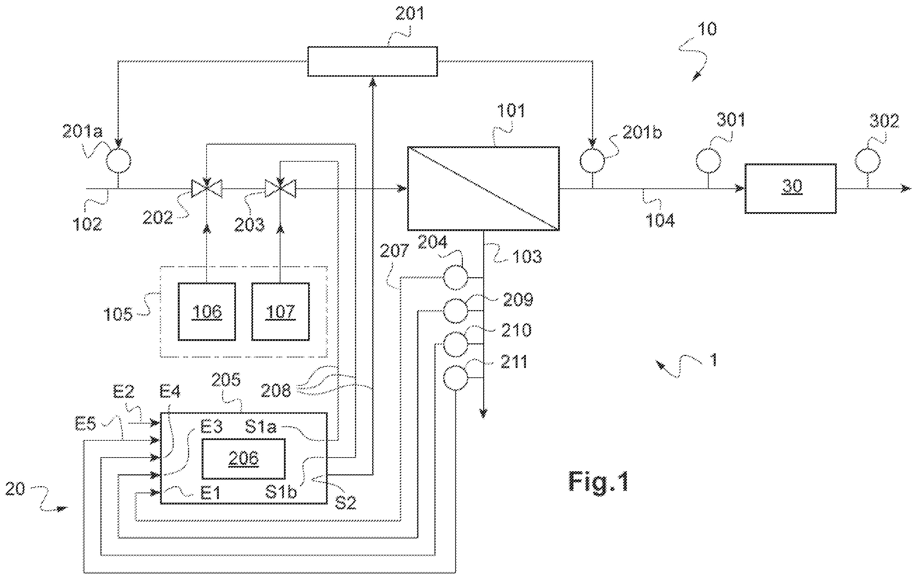

La figure 1 représente schématiquement une unité de séparation membranaire 10 faisant partie d'une installation de traitement 1 d'un effluent liquide aqueux. Cette unité de séparation membranaire 10 comprend un module membranaire 101, à membrane d'osmose inverse ou à membrane de nanofiltration. Cette unité de séparation membranaire 10 ne dispose ainsi que d'un seul étage de filtration composé d'un unique module membranaire 101. L'invention n'est toutefois pas limitée par ce mode de réalisation et l'unique étage pourrait être composé d'un ou plusieurs modules membranaires, typiquement au moins deux modules membranaires. Une conduite 102 amène l'effluent à traiter à l'unité de séparation membranaire 10, plus précisément au module de séparation membranaire 101, qui produit un rétentat et un perméat évacué via les conduites 103 et 104 respectivement.

L'unité de séparation membranaire 10 comprend également un système d'injection 105 d'au moins un composé chimique dans l'effluent à traiter. Ce dernier comprend une ou plusieurs cuves de composé chimique en connexion de fluide avec la conduite 102. Sur la figure 1, deux cuves 106, 107 sont représentées, l'une pour l'ajout d'acide, l'autre pour l'ajout d'un inhibiteur de précipitation. L'invention n'est bien entendu pas limitée par un nombre de cuves particulier, ni par la nature des composés chimiques à ajouter pourvu qu'ils permettent soit d'ajuster le pH, soit d'inhiber la précipitation. En général, on pourra prévoir au moins une cuve d'un composé chimique d'ajustement du pH, et optionnellement au moins une cuve d'un composé chimique inhibiteur de précipitation.

Le système de contrôle 20 selon l'invention permet de réguler l'unité de séparation membranaire afin d'éviter une dégradation par colmatage et/ou précipitation du module membranaire 101. A cet effet, le système de contrôle 20 comprend :
- des moyens de réglage 201 du taux de conversion de l'unité de séparation membranaire,
- des moyens de réglage 202, 203 d'une quantité d'au moins un composé chimique à ajouter à l'effluent à traiter,
- un capteur de pH 204 du rétentat, ici un pH mètre,
- une régulation 205 comprenant des moyens de calcul et de transmission 206 reliés au capteur de pH 204 par des moyens de communication 207,
- des moyens de communication 208 entre les moyens de calcul 206 et les moyens de réglage 201-203 pour y introduire les valeurs de consigne initiales et ladite au moins une valeur de consigne optimale.

Des moyens de réglage 202, 203 de la quantité de composé chimique ajoutée sont notamment prévus pour chacune des cuves de composé chimique. Ces moyens de réglage 202, 203 peuvent comprendre une pompe, un débit mètre, une vanne ou une combinaison de ces moyens.

Les moyens de réglage du taux de conversion de l'unité de séparation membranaire comprennent, dans cet exemple, un moyen de réglage 201a du débit d'effluent à traiter entrant dans l'unité de séparation membranaire et un moyen de réglage 201b du débit de perméat. Les moyens de réglage du taux de conversion comprennent également une boucle de régulation 201 qui agit sur les moyens de réglage 201a, 201b de manière à contrôler le taux de conversion en accord avec une valeur de consigne. Ces moyens de réglage 201a, 201b peuvent être une pompe, un débitmètre, une vanne ou similaire. Dans une variante, la régulation du taux de conversion pourrait être réalisée directement par la régulation 205.

Les moyens de communication 207, 208 sont par exemple des interfaces de sortie ou d'entrée/sortie. Il peut s'agit d'interfaces interfaces de communication sans fil (Bluetooth, WIFI ou autre) ou des connecteurs (port réseau, port USB, port série, port Firewire^{®}, port SCSI ou autre).

Les moyens de calcul 206 peuvent être un ou plusieurs processeurs, par exemple des microprocesseurs ou des microcontrôleurs. Le ou les processeurs peuvent avoir des moyens de stockage qui peuvent être une mémoire vive (RAM), une mémoire morte programmable effaçable électriquement (EEPROM), une mémoire flash, une mémoire externe ou autre. Ces moyens de stockage peuvent, entre autres, stocker des données reçues, un modèle de contrôle et un ou plusieurs programmes informatiques.

Le signal du capteur de pH 204 est envoyé sur une entrée E1 de la régulation 205. Par une entrée E2, la régulation 205 peut également recevoir une valeur de consigne initiale pour le taux de conversion de l'unité de séparation membranaire et/ou pour une quantité de composé chimique à ajouter à l'effluent à traiter.

Le système de contrôle peut également comprendre, tel que représenté dans le mode de réalisation de la figure 1, un capteur de température 209, un capteur de conductivité 210 et au moins un analyseur 211 apte à déterminer une concentration en au moins une espèce ionique susceptible de précipiter. Ces différents éléments 209-211 sont tous disposés sur la conduite 103 de circulation du rétentat. En variante, le capteur de température pourrait être positionné sur la conduite 102 de circulation de l'effluent à traiter ou un autre capteur de température pourrait être prévu sur cette conduite 102.

Chacun des capteurs et analyseur 209-211 fournit un signal envoyé sur une entrée E3, E4, E5 respectivement, de la régulation 205.

Les moyens de calculs 206 sont programmés pour mettre en œuvre les étapes (a) à (c) du procédé selon l'invention.

Dans cet exemple, ils sont programmés pour réguler au moins le taux de conversion de l'unité de séparation membranaire à une valeur de consigne initiale, typiquement non nulle, et éventuellement pour réguler une quantité d'au moins un composé chimique à ajouter à l'effluent à traiter à une valeur de consigne, qui peut être nulle. Ils peuvent aussi être programmés pour réguler au moins un autre paramètre de fonctionnement de l'unité à une valeur de consigne initiale ou non, typiquement non nulle.

Selon l'invention, les moyens de calculs 206 sont programmés pour déterminer, à partir de la valeur en cours du pH du rétentat fournie par le capteur 204 au moins une valeur de consigne optimale. Dans le présent exemple, ces valeurs de consigne optimales sont déterminées également à partir des valeurs en cours de la température, de la conductivité et d'une concentration en espèce ionique telles que fournies par les capteurs et analyseurs 209-211.

Cette valeur de consigne optimale peut être telle que précédemment définie aux points (i), (ii) et (iii) du procédé.

La valeur de consigne optimale (ou le couple de valeurs de consigne optimale) ainsi déterminée est ensuite délivrée sur une sortie dédiée S1a, S1b et S2 de la régulation 205 reliée par un conducteur 208 à l'entrée de chacun des moyens de réglage 201-203.

Ces valeurs de consigne peuvent être extraites d'une base de données construite lors d'une étape préalable de construction d'une base de données par des méthodes expérimentales et/ou empiriques.

On pourra par exemple créer une classification des rétentats en fonction des paramètres suivants : pH, température, conductivité, concentration en une ou plusieurs des espèces ioniques susceptibles de précipiter. Cette caractérisation des rétentats pourra notamment être réalisée au cours d'essais de traitement de différents effluents avec l'unité de séparation membranaire qui devra être contrôlée.

Puis, pour chaque classe de rétentat définie par un ensemble de ces paramètres, on détermine de manière expérimentale et/ou par des calculs (par exemple basés sur des calculs de solubilité), des paramètres de fonctionnement optimal de l'unité de séparation membranaire à contrôler permettant d'éviter une précipitation/colmatage. Cette optimalisation des paramètres peut notamment prendre en compte le coût de(s) composé(s) chimique(s) à ajouter lorsqu'un tel ajout est nécessaire pour préserver l'unité de séparation membranaire, éventuellement en combinaison avec un taux de conversion maximal ou un taux de conversion maximal en absence d'ajout de composé chimique. L'optimalisation peut également prendre en compte les coûts de prétraitement de l'effluent à traiter, les coûts énergétiques, les éventuels coûts de post-traitement du perméat et/ou du rétentat liés à l'ajout de composés chimiques. Ainsi, l'installation représentée figure 1 comprend sur la conduite 104 d'évacuation du perméat, une unité de post-traitement 30, et en aval et en amont de cette unité de post-traitement, relativement à la circulation du perméat, des capteurs de pH 301 et 302.

Ces paramètres de fonctionnement optimal comprennent ainsi :
- la quantité minimale d'au moins un composé chimique à ajouter dans un effluent pour éviter un colmatage et/ou précipitation, notamment pour différents taux de conversion, ou
- le taux de conversion maximal pour éviter un colmatage et/ou une précipitation en absence d'ajout de composé(s) chimique(s), ou
- un couple d'une quantité minimale d'au moins un composé chimique à ajouter et d'un taux de conversion maximal pour éviter un colmatage et/ou précipitation.

Ceci permet de créer une matrice permettant d'associer à une valeur de pH du rétentat, et éventuellement à au moins un autre paramètre du rétentat (conductivité, température, concentration en espèce ionique) ou de l'effluent à traiter (température), une quantité minimale, un taux de conversion maximal ou un couple d'une quantité minimale et d'un taux de conversion maximal.

En variante, on pourra collecter pour différents rétentats, les valeurs des paramètres suivants : pH, température, conductivité, concentration en une ou plusieurs des espèces ioniques susceptibles de précipiter. On pourra ensuite :
- calculer les limites de saturation des différentes espèces susceptibles de précipiter en fonction du pH du rétentat, ceci sans aucun ajout de composé chimique,
- calculer les limites de saturation des différentes espèces susceptibles de précipiter en fonction du pH du rétentat, avec ajout de composé chimique,
- réaliser une simulation des différentes conditions de fonctionnement (y compris une quantité de composé chimique à ajouter) en fonction du taux de conversion et du pH du rétentat,
- choisir la simulation optimale permettant de limiter l'ajout de composé chimique et/ou de maximiser le taux de conversion tout en évitant tout risque de colmatage et/ou précipitation.

De manière générale, on pourra en outre équiper l'installation de traitement avec un ou plusieurs systèmes de surveillance des phénomènes de colmatage/précipitation déjà connus. De tels systèmes viennent uniquement en complément du système de contrôle selon l'invention dans la mesure où ils permettent de détecter une précipitation et non de la prédire.

On pourra également par exemple contrôler la turbidité du rétentat afin de détecter tout problème de précipitation, mais ce paramètre ne sera pas utilisé pour contrôler la quantité de composé chimique à ajouter.

On pourra aussi mettre en place sur une ligne de dérivation du rétentat, une unité de membrane sacrificielle identique à l'unité de séparation membranaire mais fonctionnant à un taux de conversion plus élevé que cette dernière et dont on surveillera la dégradation par exemple en contrôlant la différence de pression entre le flux entrant dans l'unité de membrane sacrificielle et le rétentat de celle-ci. Une méthode de ce type est décrite dans le document WO0228517A1.

On pourra enfin utiliser un outil de suivi de l'entartrage d'un dispositif de récupération d'énergie (ERD « Energy recovery device »).

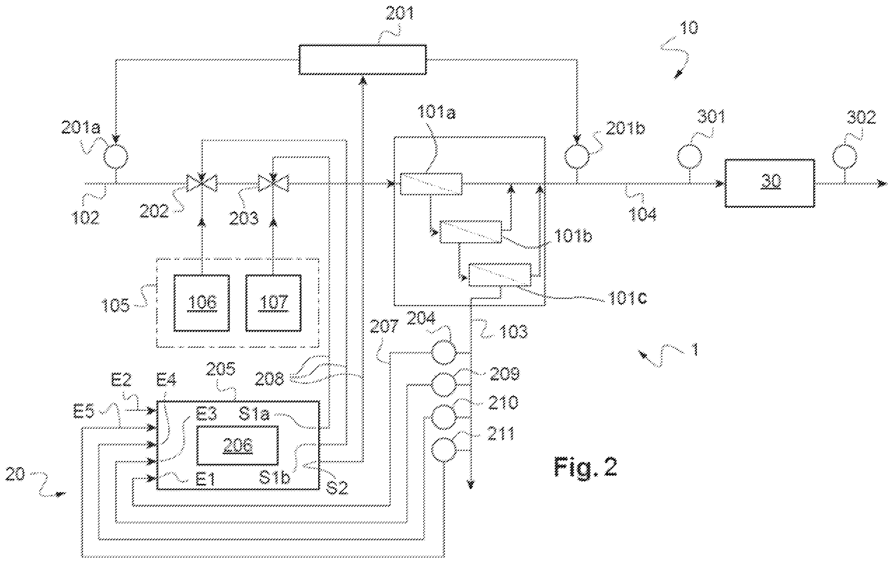

La figure 2 représente une unité de séparation membranaire 10 d'une installation de traitement 1 d'un effluent liquide aqueux qui ne diffère de celle représentée figure 1 que par le fait que l'unité de séparation membranaire comprend trois étages de filtration 101a, 101b, 101c, chaque étage de filtration pouvant être composé d'un ou plusieurs modules membranaires, typiquement au moins deux.

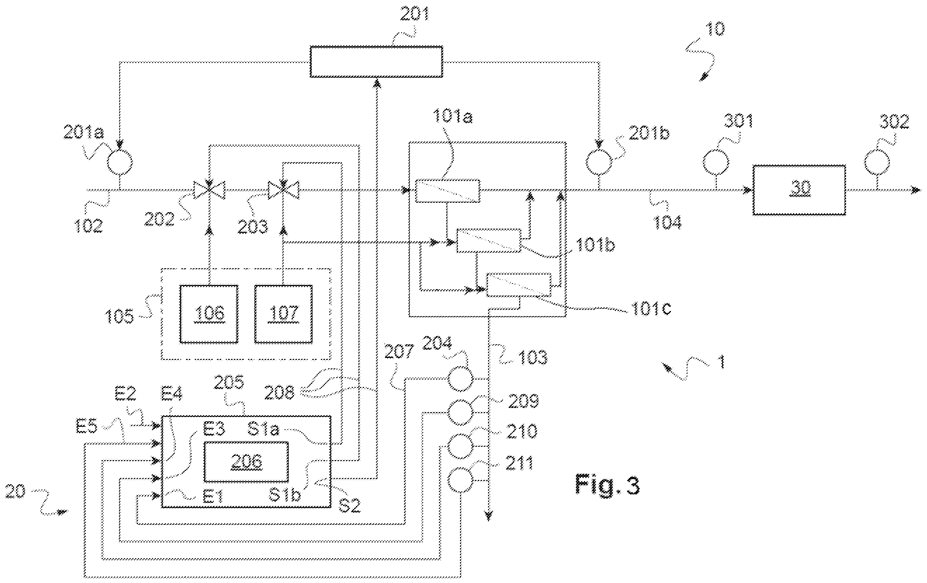

La figure 3 représente une unité de séparation membranaire 10 d'une installation de traitement 1 d'un effluent liquide aqueux qui ne diffère de celle représentée figure 2 que par le fait qu'un ajout d'au moins un des composés chimiques, ici celui de la cuve 107, par exemple contenant un composé chimique d'ajustement du pH tel qu'un acide, est envoyé à l'entrée du deuxième étage 101b et/ou à l'entrée du troisième étage 101c. Les quantités de composés chimiques sont alors régulées grâce à des moyens de réglage similaires aux moyens 202, 203 précédemment décrits (non représentés sur les figures pour des raisons de clarté) en communication également avec les moyens de calcul 206. On notera que cette configuration peut permettre d'optimiser la consommation de produit chimique (notamment d'acide), avec une consommation en baisse. A titre d'exemple, une consommation en baisse de 20 à 25% peut être observée.

Dans cet exemple, seule la cuve 107 contenant un composé chimique d'ajustement du pH alimente les étages 101b et 101c, on pourrait néanmoins prévoir que le composé chimique permettant d'inhiber la précipitation de la cuve 106 alimente également ces étages.

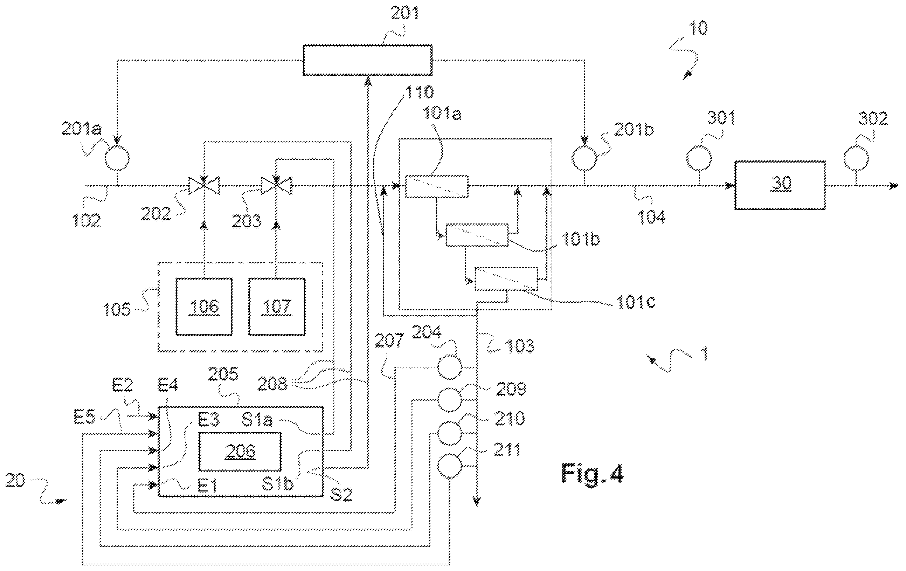

La figure 4 représente une unité de séparation membranaire 10 d'une installation de traitement 1 d'un effluent liquide aqueux qui ne diffère de celle représentée figure 2 que par le fait qu'une boucle de recirculation 110 renvoie le rétentat sortant de l'unité de traitement (ici du troisième étage de filtration 101c) à l'entrée de l'unité de traitement. Bien entendu, cette boucle de recirculation peut être prévue quel que soit le nombre d'étages de filtration de l'unité de séparation membranaire.

## Revendications

1. Procédé de contrôle d'une unité de séparation membranaire (10) d'une installation de traitement (1) d'un effluent liquide aqueux, l'unité de séparation membranaire (10) recevant l'effluent à traiter, produisant un rétentat et un perméat et comprenant un système d'injection (105) d'au moins un composé chimique dans l'effluent à traiter, dans lequel :
(a) on mesure une valeur du pH du rétentat,
(b) on détermine à partir de la valeur mesurée du pH du rétentat, au moins une valeur de consigne optimale pour éviter le colmatage de l'unité de séparation membranaire (10) et/ou la précipitation dans le rétentat d'espèces ioniques initialement présentes dans l'effluent à traiter et choisie parmi :
(i) une première valeur de consigne correspondant à une quantité minimale de l'au moins un composé chimique à ajouter à l'effluent à traiter pour un taux de conversion en cours de l'unité de séparation membranaire,
(ii) une deuxième valeur de consigne correspondant à un taux de conversion maximal en l'absence d'ajout d'un composé chimique,
(iii) un couple d'une troisième et quatrième valeur de consigne correspondant à une quantité minimale de l'au moins un composé chimique à ajouter à l'effluent à traiter combiné à un taux de conversion maximal,
(c) on applique ladite au moins une valeur de consigne optimale au paramètre correspondant de l'unité de séparation membranaire,
le procédé étant mis en œuvre avant l'apparition des phénomènes de colmatage et/ou de précipitation, avant la formation de particules de composés susceptibles de précipiter.

2. Procédé de contrôle selon la revendication 1, dans lequel :
- on procède à une itération de l'étape (a),
- à chaque itération, on vérifie au cours d'une étape (a') si la valeur du pH du rétentat mesurée à l'étape (a) atteint au moins une valeur seuil prédéterminée ou varie d'au moins une quantité prédéterminée, puis
- on met en œuvre les étapes (b) à (c) lorsque ladite au moins une valeur seuil prédéterminée ou quantité prédéterminée est atteinte.

3. Procédé de contrôle selon l'une quelconque des revendications 1 ou 2, dans lequel :
- au cours de l'étape (a) on mesure en outre la valeur d'au moins un autre paramètre du rétentat choisi parmi la conductivité et une concentration en au moins une espèce ionique susceptible de précipiter,
- optionnellement on détermine une variation de la valeur de l'au moins un autre paramètre du rétentat, et
- au cours de l'étape (b) on détermine l'au moins une valeur de consigne optimale à partir de la valeur mesurée du pH du rétentat et de la valeur mesurée de l'au moins un autre paramètre du rétentat, optionnellement de la valeur mesurée de l'au moins un autre paramètre pour lequel une variation est déterminée.

4. Procédé de contrôle selon la revendication 3, dans lequel lorsqu'une variation est déterminée à la fois pour la valeur de la conductivité et pour une concentration en au moins une espèce ionique susceptible de précipiter, on détermine ladite au moins une valeur de consigne à partir de la valeur mesurée du pH du rétentat et de la valeur mesurée de ladite au moins une concentration pour laquelle une variation a été déterminée.

5. Procédé de contrôle selon l'une quelconque des revendications 3 et 4, dans lequel au cours de l'étape (a) on mesure une concentration en au moins une espèce ionique choisie parmi un ion calcium, un ion carbonate, un ion magnésium, un ion sulfate, un ion silicium, un ion baryum, un ion strontium, un ion manganèse, un ion fer II, un ion fer III, un ion aluminium, un ion fluorure.

6. Procédé de contrôle selon l'une quelconque des revendications 1 à 5, dans lequel :
- au cours de l'étape (a), on mesure au moins une température choisie parmi la température de l'effluent à traiter et la température du rétentat, et
- au cours de l'étape (b), on détermine ladite au moins une valeur de consigne à partir de la valeur mesurée du pH du rétentat et de la valeur mesurée de l'au moins une température.

7. Procédé de contrôle selon l'une quelconque des revendications 1 à 6, dans lequel au cours de l'étape (a) on détermine le pH du rétentat, et optionnellement l'au moins autre paramètre du rétentat et/ou l'au moins une température, par des mesures en ligne.

8. Procédé de contrôle selon l'une quelconque des revendications 1 à 7, comprenant une étape préalable de constitution d'une base de données laquelle associe une ou plusieurs valeurs de consigne à des ensembles de valeurs de paramètres, ces paramètres comprenant le pH du rétentat, au moins un paramètre de fonctionnement de la même unité de séparation membranaire, et optionnellement au moins un autre paramètre choisi parmi la température du rétentat, la température de l'effluent à traiter, la conductivité du rétentat et une concentration du rétentat en au moins une espèce susceptible de précipiter.

9. Un programme informatique comprenant les instructions pour exécuter les étapes du procédé de contrôle selon l'une quelconque des revendications 1 à 8, lorsque lesdites instructions sont exécutées par un ou plusieurs processeurs.

10. Un support lisible par ordinateur sur lequel est stocké le programme informatique de la revendication 9.

11. Système de contrôle (20) d'une unité de séparation membranaire (10) d'une installation de traitement d'un effluent liquide aqueux, l'unité de séparation membranaire (10) recevant l'effluent à traiter, produisant un rétentat et un perméat et comprenant un système d'injection d'au moins un composé chimique dans l'effluent à traiter, le système de contrôle comprenant :
- des premiers moyens de réglage (201) du taux de conversion de l'unité de séparation membranaire (10),
- des deuxièmes moyens de réglage (202, 203) d'une quantité d'au moins un composé chimique à ajouter à l'effluent à traiter,
- un moyen de mesure de pH (204) du rétentat,
- des moyens de calcul et de transmission (206) reliés au moyen de mesure de pH (204) du rétentat et programmés pour, avant l'apparition des phénomènes de colmatage et/ou de précipitation, avant la formation de particules de composés susceptibles de précipiter :
(a)recevoir du moyen de mesure de pH (204) une valeur mesurée du pH du rétentat,
(b)calculer à partir de la valeur mesurée du pH du rétentat au moins une valeur de consigne optimale pour éviter le colmatage de l'unité de séparation membranaire et/ou la précipitation dans le rétentat d'espèces ioniques initialement présentes dans l'effluent à traiter,
ladite au moins une valeur de consigne étant choisie parmi :
(i) une première valeur de consigne correspondant à une quantité minimale de l'au moins un composé chimique à ajouter à l'effluent à traiter pour un taux de conversion en cours,
(ii) une deuxième valeur de consigne correspondant à un taux de conversion maximal de l'unité de séparation membranaire en l'absence d'ajout d'un composé chimique,
(iii) un couple d'une troisième et quatrième valeur de consigne correspondant à une quantité minimale de l'au moins un composé chimique à ajouter à l'effluent à traiter combiné à un taux de conversion maximal, (c)transmettre ladite valeur de consigne calculée aux moyens de réglage correspondants.

12. Système de contrôle (20) selon la revendication 11, **caractérisé en ce que** les moyens de calcul et de transmission (206) sont programmés :
- pour recevoir une pluralité de mesures du pH du rétentat,
- pour vérifier à chaque nouvelle mesure reçue si la valeur mesurée du pH du rétentat atteint au moins une valeur seuil prédéterminée ou varie d'au moins une quantité prédéterminée, puis,
- pour calculer ladite au moins une valeur de consigne et la transmettre aux moyens de réglage correspondants lorsque ladite au moins une valeur seuil prédéterminée ou quantité prédéterminée est atteinte.

13. Système de contrôle (20) selon la revendication 11 ou 12, **caractérisé en ce qu'**il comprend en outre :
- des deuxièmes moyens de mesure de la valeur d'au moins un autre paramètre du rétentat choisi parmi la conductivité et une concentration en au moins une espèce ionique susceptible de précipiter et **en ce que** les moyens de calcul et de transmission sont programmés :
- pour recevoir des deuxièmes moyens de mesure une valeur mesurée de l'au moins un autre paramètre du rétentat,
- optionnellement pour déterminer une variation de la valeur mesurée de l'au moins un autre paramètre du rétentat et
- pour calculer l'au moins une valeur de consigne à partir de la valeur mesurée du pH du rétentat et de la valeur mesurée de l'au moins un autre paramètre du rétentat, optionnellement de la valeur mesurée de l'au moins un autre paramètre pour lequel une variation est déterminée.

14. Système de contrôle (20) selon la revendication 13, dans lequel les moyens de calculs et de transmission (206) sont programmés pour, lorsqu'une variation est déterminée à la fois pour la valeur mesurée de la conductivité et de l'au moins une concentration en au moins une espèce ionique susceptible de précipiter, calculer ladite au moins une valeur de consigne à partir de la valeur mesurée du pH du rétentat et de la valeur mesurée de ladite au moins une concentration pour laquelle une variation a été déterminée.

15. Système de contrôle (20) selon l'une quelconque des revendications 13 ou 14, dans lequel les deuxièmes moyens de mesure comprennent des moyens de mesure d'une concentration en au moins une espèce ionique choisie parmi un ion calcium, un ion carbonate, un ion magnésium, un ion sulfate, un ion silicium, un ion baryum, un ion strontium, un ion manganèse, un ion fer II, un ion fer III, un ion aluminium, un ion fluorure.

16. Système de contrôle (20) selon l'une quelconque des revendications 11 à 15, **caractérisé en ce qu'**il comprend :
- des troisièmes moyens de mesure d'au moins une température choisie parmi la température de l'effluent à traiter et la température du rétentat,
et **en ce que** les moyens de calcul et de transmission sont programmés pour calculer ladite au moins une valeur de consigne à partir de la valeur mesurée du pH du rétentat et de la valeur mesurée de l'au moins une température.

## Patentansprüche

1. Steuerungsverfahren einer Membrantrenneinheit (10) einer Behandlungsanlage (1) eines wässrigen flüssigen Abwassers, wobei die Membrantrenneinheit (10) das zu behandelnde Abwasser aufnimmt, ein Retentat und ein Permeat erzeugt und ein Injektionssystem (105) mindestens einer chemischen Verbindung in das zu behandelnde Abwasser umfasst, wobei:
(a) ein pH-Wert des Retentats gemessen wird,
(b) anhand des gemessenen pH-Werts des Retentats mindestens ein optimaler Sollwert bestimmt wird, um die Verstopfung der Membrantrenneinheit (10) und/oder die Präzipitation in dem Retentat von ionischen Spezies, die ursprünglich in dem zu behandelnden Abwasser vorhanden waren, zu vermeiden, und der ausgewählt ist aus:
(i) einem ersten Sollwert, der einer Mindestmenge der mindestens einen chemischen Verbindung entspricht, die dem zu behandelnden Abwasser für eine aktuelle Umwandlungsrate der Membrantrenneinheit hinzuzufügen ist,
(ii) einem zweiten Sollwert, der einer maximalen Umwandlungsrate bei Nichthinzufügen einer chemischen Verbindung entspricht,
(j) iii) einem Paar aus einem dritten und einem vierten Sollwert, die einer Mindestmenge der mindestens einen chemischen Verbindung entsprechen, die zu dem zu behandelnden Abwasser hinzuzufügen ist, kombiniert mit einer maximalen Umwandlungsrate,
(c) der mindestens eine optimale Sollwert auf den entsprechenden Parameter der Membrantrenneinheit angewendet wird,
wobei das Verfahren vor Auftreten von Verstopfungs- und/oder Präzipitationsphänomenen, vor der Bildung von Partikeln aus Verbindungen, die präzipitieren können, durchgeführt wird.

2. Steuerungsverfahren nach Anspruch 1, wobei
- eine Iteration von Schritt (a) durchgeführt wird,
- bei jeder Iteration in einem Schritt (a') überprüft wird, ob der in Schritt (a) gemessene pH-Wert des Retentats mindestens einen vorbestimmten Schwellenwert erreicht oder sich um mindestens einen vorbestimmten Betrag ändert, und dann
- die Schritte (b) bis (c) durchgeführt werden, wenn der mindestens eine vorbestimmte Schwellenwert oder die mindestens eine vorbestimmte Menge erreicht ist.

3. Steuerungsverfahren nach einem der Ansprüche 1 oder 2, wobei:
- in Schritt (a) ferner der Wert mindestens eines weiteren Parameters des Retentats gemessen wird, der ausgewählt ist aus der Leitfähigkeit und einer Konzentration mindestens einer präzipitationsfähigen lonenspezies,
- optional eine Variation des Werts des mindestens einen anderen Parameters des Retentats bestimmt wird, und
- in Schritt (b) der mindestens eine optimale Sollwert anhand des gemessenen pH-Werts des Retentats und des gemessenen Werts des mindestens einen anderen Parameters des Retentats bestimmt wird, optional anhand des gemessenen Werts des mindestens einen anderen Parameters, für den eine Variation bestimmt wird.

4. Steuerungsverfahren nach Anspruch 3, wobei, wenn eine Variation sowohl für den Wert der Leitfähigkeit als auch für eine Konzentration mindestens einer lonenspezies, die präzipitieren kann, bestimmt wird, der mindestens eine Sollwert anhand des gemessenen Werts des pH-Werts des Retentats und des gemessenen Werts der mindestens einen Konzentration, für die eine Variation bestimmt wurde, bestimmt wird.

5. Steuerungsverfahren nach einem der Ansprüche 3 oder 4, wobei während des Schritts (a) eine Konzentration von mindestens einer ionischen Spezies gemessen wird, die ausgewählt ist aus einem Calciumion, einem Carbonation, einem Magnesiumion, einem Sulfation, einem Siliciumion, einem Bariumion, einem Strontiumion, einem Manganion, einem Eisen-II-Ion, einem Eisen-III-Ion, einem Aluminiumion und einem Fluoridion.

6. Steuerungsverfahren nach einem der Ansprüche 1 bis 5, wobei:
- in Schritt (a) mindestens eine Temperatur gemessen wird, die ausgewählt ist aus der Temperatur des zu behandelnden Abwassers und der Temperatur des Retentats, und
- in Schritt (b) der mindestens eine Sollwert anhand des gemessenen Werts des pH-Werts des Retentats und des gemessenen Werts der mindestens einen Temperatur bestimmt wird.

7. Steuerungsverfahren nach einem der Ansprüche 1 bis 6, wobei in Schritt (a) der pH-Wert des Retentats und optional der mindestens eine weitere Parameter des Retentats und/oder die mindestens eine Temperatur durch Online-Messungen bestimmt werden.

8. Steuerungsverfahren nach einem der Ansprüche 1 bis 7, umfassend einen vorherigen Schritt eines Aufbauens einer Datenbank, die einen oder mehrere Sollwerte mit Sätzen von Parameterwerten assoziiert, diese Parameter umfassend den pH-Wert des Retentats, mindestens einen Betriebsparameter der gleichen Membrantrenneinheit und optional mindestens einen weiteren Parameter, der ausgewählt ist aus der Temperatur des Retentats, der Temperatur des zu behandelnden Abwassers, der Leitfähigkeit des Retentats und einer Konzentration des Retentats in mindestens einer präzipitationsfähigen Spezies.

9. Computerprogramm, umfassend Anweisungen zum Ausführen der Schritte des Steuerungsverfahrens nach einem der Ansprüche 1 bis 8, wenn die Anweisungen von einem oder mehreren Prozessoren ausgeführt werden.

10. Computerlesbares Medium, auf dem das Computerprogramm nach Anspruch 9 gespeichert ist.

11. Steuerungssystem (20) einer Membrantrenneinheit (10) einer Behandlungsanlage eines wässrigen flüssigen Abwassers, wobei die Membrantrenneinheit (10) das zu behandelnde Abwasser aufnimmt, ein Retentat und ein Permeat erzeugt und ein Injektionssystem mindestens einer chemischen Verbindung in das zu behandelnde Abwasser umfasst, das Steuerungssystem umfassend:
- erste Einstelleinrichtungen (201) der Umwandlungsrate der Membrantrenneinheit (10),
- zweite Einstelleinrichtungen (202, 203) einer Menge mindestens einer chemischen Verbindung, die zu dem zu behandelnden Abwasser hinzuzufügen sind,
- eine pH-Messeinrichtung (204) des Retentats,
- Rechnen- und Übertragungseinrichtungen (206), die mit der pH-Messeinrichtung (204) des Retentats verbunden und programmiert sind, um vor Auftreten von Verstopfungs- und/oder Präzipitationsphänomenen vor der Bildung von Partikeln aus Verbindungen, die präzipitieren können:
a) von der pH-Messeinrichtung (204) einen gemessenen pH-Wert des Retentats zu empfangen,
b) anhand des gemessenen pHs des Retentats mindestens einen optimalen Sollwert zu berechnen, um eine Verstopfung der Membrantrenneinheit und/oder die Präzipitation von ionischen Spezies, die ursprünglich in dem zu behandelnden Abwasser vorhanden waren, in dem Retentat zu vermeiden,
wobei der mindestens eine Sollwert ausgewählt ist aus:
(i) einem ersten Sollwert, der einer Mindestmenge der mindestens einen chemischen Verbindung entspricht, die dem zu behandelnden Abwasser für eine aktuelle Umwandlungsrate hinzuzufügen ist,
(ii) einem zweiten Sollwert, der einer maximalen Umwandlungsrate der Membrantrenneinheit bei Nichthinzufügen einer chemischen Verbindung entspricht,
(iii) einem Paar aus einem dritten und einem vierten Sollwert, die einer Mindestmenge der mindestens einen chemischen Verbindung entsprechen, die zu dem zu behandelnden Abwasser hinzuzufügen ist, kombiniert mit einer maximalen Umwandlungsrate,
(c) Übertragen des berechneten Sollwerts an die entsprechenden Einstelleinrichtungen.

12. Steuerungssystem (20) nach Anspruch 11, **dadurch gekennzeichnet, dass** die Berechnungs- und Übertragungseinrichtungen (206) zu Folgendem programmiert sind:
- Empfangen einer Vielzahl von Messungen des pHs des Retentats,
- Überprüfen, bei jeder neu empfangenen Messung, ob der gemessene pH des Retentats mindestens einen vorbestimmten Schwellenwert erreicht oder um mindestens einen vorbestimmten Betrag variiert, und dann
- Berechnen des mindestens einen Sollwerts und Übertragen an die entsprechenden Einstelleinrichtungen, wenn der mindestens eine vorbestimmte Schwellenwert oder die vorbestimmte Menge erreicht wird.

13. Steuerungssystem (20) nach Anspruch 11 oder 12, **dadurch gekennzeichnet, dass** es ferner Folgendes umfasst:
- zweite Messeinrichtungen des Werts mindestens eines anderen Parameters des Retentats, der ausgewählt ist aus der Leitfähigkeit und einer Konzentration mindestens einer lonenspezies, die präzipitieren kann, und dass die Berechnungs- und Übertragungseinrichtungen zu Folgendem programmiert sind:
- Empfangen von den zweiten Messeinrichtungen eines gemessenen Werts des mindestens einen weiteren Parameters des Retentats,
- optional Bestimmen einer Variation des Messwerts des mindestens einen anderen Parameters des Retentats, und
- Berechnen des mindestens einen Sollwerts anhand des gemessenen pHs des Retentats und des gemessenen Werts des mindestens einen anderen Parameters des Retentats, optional des gemessenen Werts des mindestens einen anderen Parameters, für den eine Variation bestimmt wird.

14. Steuerungssystem (20) nach Anspruch 13, wobei die Berechnungs- und Übertragungseinrichtungen (206) programmiert sind, um, wenn eine Variation sowohl für den gemessenen Wert der Leitfähigkeit als auch für die mindestens eine Konzentration mindestens einer lonenspezies, die präzipitieren kann, bestimmt wird, den mindestens einen Sollwert anhand des gemessenen Werts des pHs des Retentats und des gemessenen Werts der mindestens einen Konzentration, für die eine Variation bestimmt wurde, zu berechnen.

15. Steuerungssystem (20) nach einem der Ansprüche 13 oder 14, wobei die zweiten Messeinrichtungen Einrichtungen zum Messen einer Konzentration von mindestens einer lonenspezies umfassen, die ausgewählt ist aus einem Calciumion, einem Carbonation, einem Magnesiumion, einem Sulfation, einem Siliciumion, einem Bariumion, einem Strontiumion, einem Manganion, einem Eisen-II-Ion, einem Eisen-III-Ion, einem Aluminiumion und einem Fluoridion.

16. Steuerungssystem (20) nach einem der Ansprüche 11 bis 15, **dadurch gekennzeichnet, dass** es Folgendes umfasst:
- dritte Messeinrichtungen mindestens einer Temperatur, die ausgewählt ist aus der Temperatur des zu behandelnden Abwassers und der Temperatur des Retentats, und dass die Berechnungs- und Übertragungseinrichtungen programmiert sind, um den mindestens einen Sollwert anhand des gemessenen Werts des pHs des Retentats und des gemessenen Werts der mindestens einen Temperatur zu berechnen.

## Claims

1. A method for controlling a membrane separation unit (10) of an aqueous liquid effluent treatment plant (1), the membrane separation unit (10) receiving the effluent to be treated, producing a retentate and a permeate and comprising a system for injecting (105) at least one chemical compound into the effluent to be treated, wherein:
(a) a pH value of the retentate is measured,
(b) based on the measured pH value of the retentate, at least one optimum setpoint value is determined to avoid clogging of the membrane separation unit (10) and/or precipitation of ionic species initially present in the effluent to be treated in the retentate and selected from:
(i) a first setpoint value corresponding to a minimum amount of the at least one chemical compound to be added to the effluent to be treated for a current conversion rate of the membrane separation unit,
(ii)a second setpoint value corresponding to a maximum conversion rate when no chemical compound is added,
(iii) a pair of a third and fourth setpoint values corresponding to a minimum amount of the at least one chemical compound to be added to the effluent to be treated combined with a maximum conversion rate,
(c) said at least one optimum setpoint value is applied to the corresponding parameter of the membrane separation unit,
the method being implemented before the onset of clogging and/or precipitation phenomena, before the formation of particles of compounds likely to precipitate.

2. The control method according to claim 1, wherein:
- it is proceeded with an iteration of step (a),
- at each iteration, it is verified during a step (a') whether the value of the pH of the retentate measured in step (a) reaches at least one predetermined threshold value or varies by at least one predetermined amount, then
- steps (b) to (c) are implemented when said at least one predetermined threshold value or predetermined amount is reached.

3. The control method according to any one of claims 1 or 2, wherein:
- during step (a), the value of at least one other parameter of the retentate selected from the conductivity and a concentration of at least one ionic species likely to precipitate is also measured,
- optionally, a variation of the value of the at least one other parameter of the retentate is determined, and
- during step (b), the at least one optimum setpoint value is determined based on the measured value of the pH of the retentate and the measured value of the at least one other parameter of the retentate, optionally based on the measured value of the at least one other parameter for which a variation is determined.

4. The control method according to claim 3, wherein when a variation is determined for both the value of the conductivity and for a concentration of at least one ionic species which is likely to precipitate, said at least one setpoint value is determined based on the measured value of the pH of the retentate and the measured value of said at least one concentration for which a variation has been determined.

5. The control method according to any one of claims 3 and 4, wherein during step (a) a concentration of at least one ionic species selected from a calcium ion, a carbonate ion, a magnesium ion, a sulphate ion, a silicon ion, a barium ion, a strontium ion, a manganese ion, an iron II ion, an iron III ion, an aluminium ion, a fluoride ion is measured.

6. The control method according to any one of claims 1 to 5, wherein:
- during step (a), at least one temperature selected from the temperature of the effluent to be treated and the temperature of the retentate is measured, and
- during step (b), said at least one setpoint value is determined based on the measured value of the pH of the retentate and the measured value of the at least one temperature.

7. The control method according to any one of claims 1 to 6, wherein during step (a) the pH of the retentate is determined, and optionally the at least one other parameter of the retentate and/or the at least one temperature, by inline measurements.

8. The control method according to any one of claims 1 to 7, comprising a prior step of building up a database which associates one or more setpoint value(s) with sets of parameter values, these parameters comprising the pH of the retentate, at least one operating parameter of the same membrane separation unit, and optionally at least one other parameter selected from the temperature of the retentate, the temperature of the effluent to be treated, the conductivity of the retentate and a concentration in the retentate of at least one species likely to precipitate.

9. A computer program comprising the instructions for executing the steps of the control method according to any one of claims 1 to 8, when said instructions are executed by one or more processor(s).

10. A computer-readable medium on which the computer program of claim 9 is stored.

11. A control system (20) for controlling a membrane separation unit (10) of an aqueous liquid effluent treatment plant, the membrane separation unit (10) receiving the effluent to be treated, producing a retentate and a permeate and comprising a system for injecting at least one chemical compound into the effluent to be treated, the control system comprising:
- first means (201) for adjusting the conversion rate of the membrane separation unit (10),
- second means (202, 203) for adjusting an amount of at least one chemical compound to be added to the effluent to be treated,
- a means for measuring the pH (204) of the retentate,
- calculation and transmission means (206) connected to the means for measuring the pH (204) of the retentate and programmed to, before the onset of clogging and/or precipitation phenomena, before the formation of particles of compounds likely to precipitate:
(a) receive a measured value of the pH of the retentate from the means for measuring the pH (204),
(b) calculate based on the measured value of the pH of the retentate at least one optimum setpoint value to avoid clogging of the membrane separation unit and/or precipitation of ionic species initially present in the effluent to be treated in the retentate,
said at least one setpoint value being selected from:
(i) a first setpoint value corresponding to a minimum amount of the at least one chemical compound to be added to the effluent to be treated for a current conversion rate,
(ii) a second setpoint value corresponding to a maximum conversion rate of the membrane separation unit when no chemical compound is added,
(iii) a pair of a third and fourth setpoint values corresponding to a minimum amount of the at least one chemical compound to be added to the effluent to be treated combined with a maximum conversion rate,
(c) transmit said calculated setpoint value to the corresponding adjustment means.

12. The control system (20) according to claim 11, **characterised in that** the calculation and transmission means (206) are programmed:
- to receive a plurality of measurements of the pH of the retentate,
- to verify at each received new measurement whether the measured value of the pH of the retentate reaches at least one predetermined threshold value or varies by at least one predetermined amount, then,
- to calculate said at least one setpoint value and transmit it to the corresponding adjustment means when said at least one predetermined threshold value or predetermined amount is reached.

13. The control system (20) according to claim 11 or 12, **characterised in that** it further comprises:
- second means for measuring the value of at least one other parameter of the retentate selected from the conductivity and a concentration of at least one ionic species likely to precipitate and **in that** the calculation and transmission means are programmed:
- to receive from the second measuring means a measured value of the at least one other parameter of the retentate,
- optionally to determine a variation of the measured value of the at least one other parameter of the retentate and
- to calculate the at least one setpoint value based on the measured value of the pH of the retentate and the measured value of the at least one other parameter of the retentate, optionally based on the measured value of the at least one other parameter for which a variation is determined.

14. The control system (20) according to claim 13, wherein the calculation and transmission means (206) are programmed to, when a variation is determined for both the measured value of the conductivity and the at least one concentration of at least one ionic species likely to precipitate, calculate said at least one setpoint value based on the measured value of the pH of the retentate and the measured value of said at least one concentration for which a variation has been determined.

15. The control system (20) according to any one of claims 13 or 14, wherein the second measuring means comprise means for measuring a concentration of at least one ionic species selected from a calcium ion, a carbonate ion, a magnesium ion, a sulphate ion, a silicon ion, a barium ion, a strontium ion, a manganese ion, an iron II ion, an iron III ion, an aluminium ion, a fluoride ion.

16. The control system (20) according to any one of claims 11 to 15, **characterised in that** it comprises:
- third means for measuring at least one temperature selected from the temperature of the effluent to be treated and the temperature of the retentate, and **in that** the calculation and transmission means are programmed to calculate said at least one setpoint value based on the measured value of the pH of the retentate and the measured value of the at least one temperature.
